# EUROPÄISCHE PATENTANMELDUNG

(11) **EP 3 409 512 A2**
(43) Veröffentlichungstag der Anmeldung: **05.12.2018**
(21) Anmeldenummer: 18169551.1
(22) Anmeldetag: 26.04.2018
(51) Int. Cl.: B60C 23/06, B60C 23/04, B60T 8/172, B60T 8/58, G01P 3/48, G01P 3/44

(54) **VERFAHREN UND VORRICHTUNG ZUR ERFASSUNG EINER FAHRZEUGGESCHWINDIGKEIT**

(30) Priorität: 09.05.2017 DE 102017207825
(71) Anmelder: Robert Bosch GmbH, 70442 Stuttgart (DE)
(72) Erfinder: Eckel, Andreas, 73271 Holzmaden (DE); Dackermann, Tim, 72072 Tuebingen (DE); Greiner, Rinaldo, 72762 Reutlingen (DE)

(57) **Zusammenfassung**

Verfahren und Vorrichtung zur manipulationssicheren Geschwindigkeitsbestimmung, sowie Fahrrad mit einer derartigen Vorrichtung. Ein dynamisches Drucksensorsignal, d.h. ein zeitlicher Verlauf von Druckänderungen, wird in einem Reifen eines Fahrzeugs erfasst. Die Auswertung dieses dynamischen Drucksensorsignals erlaubt dabei, eine Geschwindigkeit des Reifens abzuleiten. Alternativ hierzu oder auch zusätzlich kann über einen Umrechnungsfaktor auch die Geschwindigkeit des Fahrzeugs, z.B. eines Fahrrads abgeleitet werden. Optional können aus dem dynamischen Drucksensorsignal zusätzlich Informationen zum befahrenen Untergrund und zum Zustand des Reifens ermittelt werden.

## Beschreibung

Die Erfindung betrifft ein Verfahren sowie eine Vorrichtung zur Erfassung einer Fahrzeuggeschwindigkeit insbesondere in Form einer Anwendung bei einem Fahrrad.

### Stand der Technik

Die Erfassung der Geschwindigkeit eines Fahrzeugs kann auf unterschiedliche Weise erfolgen. So unterscheidet man fahrzeuggebundene als auch fahrzeugunabhängige Methoden. Als fahrzeugunabhängiges Verfahren ist beispielsweise die Geschwindigkeitserfassung mittels GPS-Signale zu nennen, bei denen ein externes Signal zur Ermittlung der Bewegung herangezogen wird. Dagegen wird bei fahrzeuggebundenen Systemen üblicherweise ein bewegliches Teil am Fahrzeug überwacht, um daraus die Geschwindigkeit des Fahrzeugs abzuleiten.

Ein Beispiel einer Überwachung eines am Fahrzeug befindlichen und während der Fahrt beweglichen Teils stellen Raddrehzahlsensoren dar. Bei Fahrrädern und Pedelecs sind diese Raddrehzahlsensoren mittels Magneten und Reed-Sensoren realisiert, die bei jedem Durchlauf des Magnets an der Speicher einen Impuls liefert. Aus dem zeitlichen Abstand zweier Impulse kann so auf die Drehgeschwindigkeit des Rads und mittels eines Umrechnungsfaktors auf die Geschwindigkeit des Fahrzeugs bzw. Fahrrads geschlossen werden. Nachteilig bei einer derartigen Geschwindigkeitserfassung ist die notwendige Zeitdauer, da zumindest zwei Impulse registriert werden müssen. Bei sehr langsamen Drehbewegungen ist daher die Erfassung sehr ungenau. Weiterhin besteht bei dieser Form der Geschwindigkeitserfassung sehr leicht die Möglichkeit einer Manipulation.

Als Alternative können Beschleunigungssensoren verwendet werden, die ebenfalls eine Geschwindigkeitsinformation erzeugen können. Der Betrieb derartiger Beschleunigungssensoren ist jedoch energieaufwändiger, so dass diese Art der Erfassung eher bei elektrifizierten Fahrzeugen zum Einsatz kommt. Zudem besteht die Gefahr, dass eine numerische Integration der Beschleunigungswerte mit der Zeit driften und somit einen falschen Wert annehmen könnte.

Mit der vorliegenden Erfindung soll daher eine Geschwindigkeitserfassung präsentiert werden, die auf einfache und kostengünstige Weise realisiert werden kann. Darüber hinaus bietet diese erfindungsgemäße Erfassung verschiedene Zusatznutzen aus der Verarbeitung der zugrunde liegenden Sensordaten.

### Offenbarung der Erfindung

Mit der vorliegenden Erfindung soll eine Geschwindigkeitserfassung vorgeschlagen werden, die fahrzeuggebunden und manipulationssicher realisiert werden kann. Hierzu wird ein Verfahren, eine Vorrichtung sowie ein Fahrrad mit einer derartigen Vorrichtung beansprucht, bei der zunächst ein dynamisches Drucksensorsignal, d.h. einen zeitlichen Verlauf von Druckänderungen, in einem Reifen eines Fahrzeugs erfasst wird. Die Auswertung dieses dynamischen Drucksensorsignals erlaubt dabei, eine Geschwindigkeit des Reifens abzuleiten. Alternativ hierzu oder auch zusätzlich kann über einen Umrechnungsfaktor auch die Geschwindigkeit des Fahrzeugs, z.B. eines Fahrrads abgeleitet werden.

Weiterhin kann das dynamische Drucksensorsignal dazu verwendet werden, eine Information über den befahrenen Untergrund zu erzeugen. Hierbei kann beispielsweise das Rauschen des dynamischen Drucksensorsignals ausgewertet werden. Durch einen Vergleich der erhaltenen Auswertung mit abgespeicherten Daten zu verschiedenen Fahrbahnuntergründen kann so eine Zuweisung und Ausgabe einer Untergrundinformation erzeugt werden.

Ausgehend von dem erkannten Fahrbahnuntergrund kann zusätzlich eine weitere Information aus dem dynamischen Drucksensorsignal abgeleitet werden, die den Reifendruck repräsentiert. Dies kann beispielsweise durch die Auswertung der Extremwerte und/oder der Durchschnittswerte des dynamischen Drucksensorsignals erreicht werden. So können entweder die Maximalwerte, Minimalwerte oder beide Extremwerte gemeinsam ausgewertet werden. Die so erhaltene Reifendruckinformation kann zusammen mit der Untergrundinformation eine Information darüber abgeben, inwieweit der statisch eingestellt Reifendruck für den befahrenen Untergrund geändert werden sollte. Diese Reifendruckänderungsinformation kann z.B. dem Fahrer oder einem automatischen Reifendruckkontrollsystem mitteilen, dass eine Erhöhung oder Erniedrigung ein besseres und sicheres Befahren ermöglicht. Entsprechende Kennfelder für passende Reifendrücke bei verschiedenen Untergründen können in einem Speicher abgelegt sein.

Eine weitere Möglichkeit zur Auswertung der dynamischen Reifendruck wird dazu verwendet, den Reifenzustand abzuleiten. Hierzu kann beispielsweise die zeitliche Veränderung des dynamischen Drucksensorsignals über einen längeren Zeitraum betrachtet werden. Hierzu ist notwendig, dass entsprechende dynamischen Drucksensorsignale in einem Speicher abgespeichert werden, so dass sie zur Auswertung herangezogen werden können. Optional können in diesem Speicher weitere Informationen über den Reifen abgelegt sein, die zur Auswertung herangezogen werden können. Denkbar sind hier beispielsweise Informationen über den Reifentyp, das Profil und/oder Pumpvorgänge. Diese Informationen können entweder manuell oder durch separate automatische Ermittlungsalgorithmen abgespeichert werden. Eine Möglichkeit, den Reifenzustand abzuleiten, besteht beispielsweise durch den Vergleich der Maximalwerte der dynamischen Drucksensorsignale über einen längeren Zeitraum. Wird die so ermittelte Reifenzustandsinformation mit einem Abnutzungsschwellenwert verglichen, kann der Fahrer auch rechtzeitig über die Notwendigkeit eines Reifenwechsels informiert werden.

Die Vorrichtung zur Erfassung der Geschwindigkeit des Reifens bzw. des Fahrzeugs kann sowohl am Reifen als auch am Fahrzeug angebracht sein. Für den Fall, dass eine die Vorrichtung separat vom Drucksensor vorgesehen ist, muss sichergestellt sein, dass die Vorrichtung ein Empfangsmodul zum Empfang der dynamischen Drucksensorsignal aufweist, beispielsweise drahtlos mittels Funkübertragung.

In einer besonderen Ausgestaltung der Erfindung ist die Vorrichtung mit einer Recheneinheit ausgestattet, welche die dynamischen Drucksensorsignale auswertet. Zur Weitergabe der erzeugten Geschwindigkeitsinformation, Untergrundinformation, Reifendruckinformation, Reifenzustandsinformation und/oder Reifenwechselinformation kann eine Sendeeinheit vorgesehen sein, die zu einem Steuergerät am Fahrzeug gesendet wird.

Besonders vorteilhaft ist die Ausgestaltung der Vorrichtung als Ventil an einem Reifen, insbesondere an einem Fahrradreifen. Dabei kann der Drucksensor ebenfalls direkt in dem Ventil integriert sein. Darüber hinaus ist auch möglich, den Sensor im Felgendband unterzubringen bzw. zu integrieren.

Die Erfindung ist generell bei jedem Fahrzeug einsetzbar. Besondere Vorteile ergeben sich jedoch bei der Anwendung in einem Zweirad und insbesondere bei einem Elektrofahrrad.

Weitere Vorteile ergeben sich aus der nachfolgenden Beschreibung von Ausführungsbeispielen bzw. aus den abhängigen Patentansprüchen.

### Kurze Beschreibung der Zeichnungen

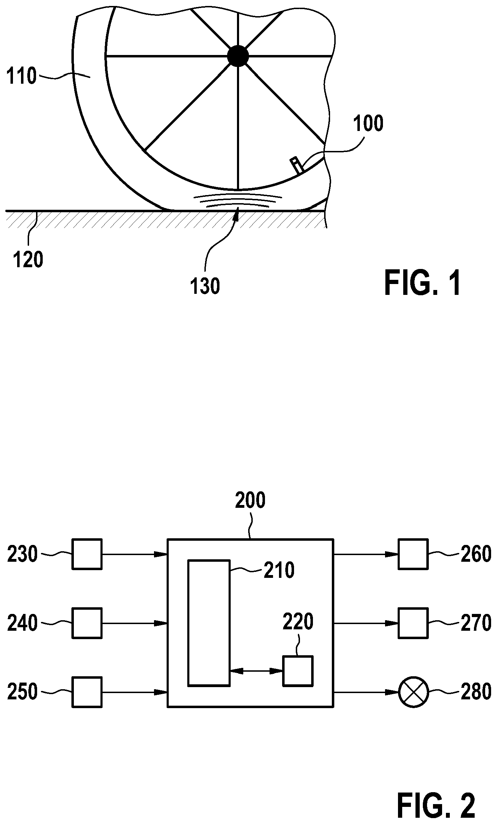

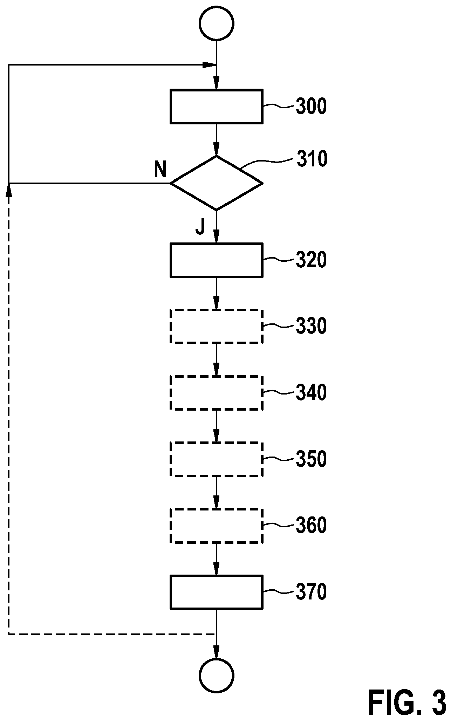

In der Figur 1 ist schematisch der Sachverhalt dargestellt, der die Grundlage für die Erfindung bildet. Die Figur 2 zeigt ein Blockschaltbild, welches schematisch eine erfindungsgemäße Vorrichtung darstellt. Ein entsprechend erfindungsgemäßes Verfahren ist in Figur 3 abgebildet.

### Offenbarung der Erfindung

Die nachfolgende Beschreibung der Erfindung wird anhand eines Fahrradreifens ausgeführt. Dabei kann die Erfindung selbstverständlich auch bei jedem anderen Fahrzeug verwendet werden, insbesondere bei Motorrädern oder Elektrofahrrädern.

Beim Befahren eines Untergrunds 120 mit einem Reifen 110 besteht hinsichtlich der Geschwindigkeit, mit der sich der Reifen 110 auf dem Untergrund 120 bewegt, ein Zusammenhang zwischen dem Luftdruck des Reifens, dem Profil und dem Material des Reifens sowie der Untergrundbeschaffenheit. Geht man in einer ersten Näherung davon aus, dass sich bei einer befahrenen Strecke der Untergrund, das Profil und der statische Luftdruck im Reifen bei ansonsten gleichen oder ähnlichen Betriebsparametern des Fahrzeugs nicht wesentlich ändert, kann man über die Verbiegungen bzw. Quetschungen 130 des Reifenmantels eine Aussage über die Geschwindigkeit des Reifens 110 ableiten. Diese Quetschungen erzeugen im Reifen dynamische Druckschwankungen, die als Druckwellen mittels eines Drucksensors, z.B. im Ventil 100 erfasst werden können.

Generell ist für die Erfindung ein System vorgesehen, welches aus einer Recheneinheit 200 besteht, die ein Drucksensorsignal eines Drucksensors 230 erfasst. Die Auswertung des Drucksensorsignals kann dabei beispielsweise in einem Mikroprozessor 210 stattfinden, der mit einem Speicher 220 verbunden ist. Zur Ableitung der Geschwindigkeit kann dabei aus dem Drucksensorsignal neben dem statischen Druck, der den normalen Reifendruck repräsentiert, auch der dynamische Druck erfasst werden. Dieser dynamische Druck kann aus einer zeitlichen Betrachtung des statischen Drucks abgeleitet werden, indem die Druckschwankungen erfasst werden. Basierend auf Vergleichswerten, die entweder mittels einer manuellen Eingabemöglichkeit 250 eingegeben und abgespeichert werden können oder aufgrund von zuvor aufgenommenen Daten, kann anhand des dynamischen Drucks auf die Geschwindigkeit des Reifens 110 und somit über einen Umrechnungsfaktor auf die Geschwindigkeit des Fahrzeugs, an dem der Reifen 110 angebracht ist, geschlossen werden. Optional können weitere Daten oder Sensorgrößen, z.B. von einem oder mehreren Sensoren 240 erfasst werden, um die Genauigkeit der Geschwindigkeitsbestimmung zu erhöhen oder zu verifizieren. Die so bestimmte Geschwindigkeit kann direkt dazu verwendet werden, um den Motor 260 des Fahrzeugs anzusteuern, z.B. den Elektromotor eines Fahrrads. Es ist jedoch auch möglich, dass die Geschwindigkeit an eine Anzeige 280 oder eine Verarbeitungseinheit 270 gesendet wird, die auf der Basis der Geschwindigkeit ein System im oder am Fahrzeug steuert oder regelt. Denkbar ist hierbei z.B. eine Navigationseinheit, die in Abhängigkeit der Reifendruckdaten bestimmte Strecken für die Streckenplanung aussortiert oder ein Reifendruckkontrollsystem, welches des Reifendruck an die momentane oder noch zu befahrene Fahrbahnoberfläche anpasst.

Die Übertragung der abgeleiteten Geschwindigkeit kann leitungsgebunden oder per Funk erfolgen. So ist denkbar, dass die Recheneinheit 200 sowie der Drucksensor 230 im Ventil 100 integriert sind, so dass eine drahtlose Verbindung zur Weitergabe der Geschwindigkeitsinformation notwendig ist. Hierzu kann in der Recheneinheit 200 selber oder ihr entsprechend zugeordnet ein Übertragungsmodul ebenfalls im Ventil 100 angeordnet sein. Es kann jedoch auch vorgesehen sein, dass nur der Drucksensor 230 am bzw. im Reifen 110 angeordnet ist und die Drucksensorsignale per Funk an die Recheneinheit 200 weitergeleitet wird. Denkbar ist beispielsweise dass die Recheneinheit 200 Teil eines Mensch-Maschine-Schnittstelle (HMI) ist, über die u.a. der Motor 260 einer Elektrofahrrads gesteuert wird.

Ein mögliches Verfahren, welches in der Recheneinheit 200 bzw. dem Mikroprozessor 210 ablaufen kann, um die Geschwindigkeit aus den Drucksensorsignalen abzuleiten, ist in Figur 3 dargestellt. Dabei werden in einem ersten Schritt 300 Sensorsignale erfasst und ggf. abgespeichert, die einen Druck im Reifen eines sich bewegenden Fahrzeugs repräsentieren. Üblicherweise werden hierzu Drucksensorsignale eines Drucksensors verwendet, jedoch können auch andere Sensorsignale erfasst werden, die die entsprechende dynamische Druckinformation aufweisen. Im Vergleich zur Erfassung eines statischen (Luft-)Drucks im Reifen ist für die Erfassung im Schritt 300 notwendig, dass die Sensorsignale über eine gewisse Zeit erfasste werden, um den dynamischen, d.h. veränderlichen Teil der Drucksensordaten zu erhalten. Im nächsten zweiten Schritt 310 wird daraufhin überprüft, inwieweit die vorliegenden (Druck-)Sensorsignale ausreichen, um eine Ableitung der Geschwindigkeit zu ermöglichen. Ist das nicht der Fall, werden im Schritt 300 erneut (Druck-)Sensorsignale erfasst. Alternativ kann auch vorgesehen sein, dass die Schritte 300 und 310 zusammen gelegt werden oder dass beständig Drucksensorsignale vorliegen, die je nach Bedarf und Möglichkeit ausgewertet werden. Die Ableitung der Geschwindigkeit erfolgt darauf im dritten Schritt 320. Hierbei wird aus den Druckschwankungen gegenüber einem Mittelwert der Drucksensorsignale auf die Quetschung des Reifenmaterial, insbesondere der Mantelseitenflächen, und somit auf die Geschwindigkeit geschlossen. Eine weitere Möglichkeit besteht darin, die erhaltenen dynamischen Druckschwankungen mit Vergleichswerten zu vergleichen, um die Geschwindigkeit zu ermitteln. Die so ermittelte Geschwindigkeit wird anschließend im Schritt 370 an entsprechende weitere Systeme, wie z.B. ein Motorsteuersystem, eine Anzeige oder eine Verarbeitungseinheit weitergegeben, bevor das Verfahren beendet oder erneut mit Schritt 300 durchlaufen wird.

Alternativ oder zusätzlich kann im Schritt 320 auch die Art der Erfassung der Drucksensorsignale herangezogen werden, um die Geschwindigkeit abzuleiten. So können bei der Integration des Drucksensors 230 im Ventil 100 gerade beim Durchlauf des Reifens 110 im Bereich des Fahrbahnkontakts Druckspitzen erfasst werden, die charakteristisch für die Geschwindigkeit sind.

Die Erfassung der Drucksensorsignale im Schritt 300 sowie der Ermittlung der dynamischen Anteile im Schritt 320 kann in nachfolgenden zusätzlichen Verfahrensschritte verwendet werden, um weitere Aussagen abzuleiten. Dabei können die einzelnen Erweiterungen der Auswertung beliebig miteinander kombiniert werden.

In einer ersten Erweiterung kann basierend auf der Art des Rauschens der dynamischen Drucksensorsignale in einem Schritt 330 die Untergrundbeschaffenheit abgeleitet werden. Denkbar hierbei ist beispielsweise, dass die Extremwerte in Verbindung mit ihrer Häufigkeit erfasst werden. Die so erhaltenen Werte können dann mit abgespeicherten Vergleichsdaten verglichen werden, um auf die Untergrundbeschaffenheit zu schließen. Entsprechend kann im Schritt 370 auch eine Information über den Untergrund und dessen Beschaffenheit weitergegeben werden.

Eine zweite Erweiterung erfasst im Schritt 340 die Form der Druckschwankungen bzw. der Druckwelle(n), um daraus abzuleiten, inwiefern der Reifendruck für die aktuelle Untergrundbeschaffenheit angepasst werden muss. Hierbei kann beispielsweise auch die Untergrundbeschaffenheit, die im Schritt 330 ermittelt wird, herangezogen werden. Neben den Druckschwankungen kann im Schritt 340 auch der statische Druck verwendet werden, um ggf. einen Unterschied zur Belastung während des Fahrens abzuleiten. Im Schritt 370 kann in dieser Erweiterung neben einer Empfehlung zum Aufpumpen oder Druckablassen im Reifen auch direkt ein Luftdruckkontrollsystem angesteuert werden, welches den Druck im Reifen regelt.

In der dritten Erweiterung des Grundverfahrens kann im Schritt 350 aufgrund der dynamischen Drucksensorsignale und/oder weiterer Sensordaten auf den Reifentyp sowie das Reifenprofil geschlossen werden. So ist denkbar, dass mittels der Erfassung des Untergrunds über ein separates Sensorsystem Rückschlüsse auf das Reifenprofil möglich sind. Die so erhaltenen Informationen können im Schritt 370 dazu verwendet werden, den Fahrer des Fahrzeugs über einen notwendigen Reifwechsel zu informieren. Alternativ ist auch möglich, die Information über das Reifenprofil zur Navigationszwecken zu verwenden, z.B. zur bewussten Führung auf Strecken, für die das Profil geeignet ist.

Die vierte Erweiterung im Schritt 360 betrifft ebenfalls das Reifenprofil, wobei in diesem Verfahrensschritt gezielt die Abnutzung ermittelt wird. Hierzu werden historische, d.h. zuvor abgespeicherte Daten der dynamischen Drucksensorsignale oder beim Wechsel des Reifens manuell eingespeicherte Daten verwendet als Vergleichswerte verwendet. Hierbei können ebenfalls wie bei der Erkennung der Untergrundbeschaffung und/oder des Reifenprofils sowohl die Art der Druckschwankungen, der Form der einzelnen Druckwellen und/oder Min-/Max-Betrachtungen der einzelnen dynamischen Drucksensorsignalen verwendet werden. Diese Daten, Größen oder Werte werden mit Vergleichswerten und/oder Schwellenwerten verglichen, um zu erkennen, ob die Abnutzung des Reifens so groß geworden ist, dass ein Wechsel erforderlich ist. Die Abnutzungs- bzw. Wechselinformation kann anschließend im Schritt 370 an den Fahrer oder an ein entsprechendes System zur Weiterverarbeitung weitergeleitet werden. So kann ggf. ein Navigationssystem mit dieser Information Routen vermeiden, für die der abgenutzte Reifen nicht mehr geeignet ist. Darüber hinaus kann mit diesen Informationen auch ein Reifendruckkontrollsystem gesteuert werden, das den Reifendruck erhöht oder erniedrigt.

## Patentansprüche

1. Verfahren zur Geschwindigkeitserfassung in einem Fahrzeug, wobei das Verfahren
• ein dynamisches Drucksensorsignal in einem Reifen (110) des Fahrzeugs erfasst (300) und
• in Abhängigkeit des Drucksensorsignals eine Geschwindigkeitsinformation erzeugt (320), die die Geschwindigkeit des Reifens (110) und/oder des Fahrzeugs repräsentiert.

2. Verfahren nach Anspruch 1, **dadurch gekennzeichnet, dass** das Verfahren
• in Abhängigkeit des dynamischen Drucksensorsignals eine Untergrundinformation erzeugt (330), die die Beschaffenheit des befahrenen Untergrunds repräsentiert,
wobei insbesondere vorgesehen ist, dass zur Erzeugung der Untergrundinformation die Art des Rauschens des dynamischen Drucksensorsignals ausgewertet wird.

3. Verfahren nach Anspruch 2, **dadurch gekennzeichnet, dass** das Verfahren
• in Abhängigkeit des dynamischen Drucksensorsignals eine Reifendruckinformation erzeugt (340),
wobei insbesondere vorgesehen ist, dass zur Erzeugung der Reifendruckinformation Extremwerte und/oder den Durchschnitt es dynamischen Drucksensorsignals ausgewertet werden, und
• ein Vergleich der Reifendruckinformation mit der Untergrundinformation durchführt (340), und
• in Abhängigkeit des Vergleichs eine Reifendruckänderungsinformation erzeugt (340).

4. Verfahren nach einem der vorherigen Ansprüche, **dadurch gekennzeichnet, dass** das Verfahren
• in Abhängigkeit der zeitlichen Veränderung des dynamischen Drucksensorsignals eine Reifenzustandsinformation erzeugt (360),
wobei insbesondere vorgesehen ist, dass zur Erzeugung der Reifenzustandsinformation die Extremwerte und/oder der Durchschnitt des dynamischen Drucksensorsignals ausgewertet werden.

5. Verfahren nach Anspruch 4, **dadurch gekennzeichnet, dass** das Verfahren
• ein Vergleich der Reifenzustandsinformation mit einem Abnutzungsschwellenwert durchführt (360), und
• in Abhängigkeit des Vergleichs eine Reifenwechselinformation erzeugt (360).

6. Vorrichtung (200) zur Geschwindigkeitserfassung, mit
• einer Recheneinheit (210) zur Auswertung von durch einen Drucksensor (230) in einem Reifen (110) eine Fahrzeugs erfassten dynamischen Drucksensorsignale nach einem der Ansprüche 1 bis 5,
wobei die Recheneinheit (210) mittels der dynamischen Drucksensorsignale eine Geschwindigkeitsinformation erzeugt, die die Geschwindigkeit des Reifens (110) und/oder des Fahrzeugs repräsentiert.

7. Vorrichtung (200) nach Anspruch 6, **dadurch gekennzeichnet, dass** die Recheneinheit (210)
• in Abhängigkeit des dynamischen Drucksensorsignals eine Untergrundinformation erzeugt, die die Beschaffenheit des befahrenen Untergrunds (120) repräsentiert,
wobei insbesondere vorgesehen ist, dass die Recheneinheit (210) zur Erzeugung der Untergrundinformation die Art des Rauschens des dynamischen Drucksensorsignals ausgewertet wird.

8. Vorrichtung (200) nach Anspruch 7, **dadurch gekennzeichnet, dass** die Recheneinheit (210)
• in Abhängigkeit des dynamischen Drucksensorsignals eine Reifendruckinformation erzeugt,
wobei insbesondere vorgesehen ist, dass zur Erzeugung der Reifendruckinformation Extremwerte und/oder der Durchschnittswerte des dynamischen Drucksensorsignals ausgewertet werden, und
• ein Vergleich der Reifendruckinformation mit der Untergrundinformation durchführt, und
• in Abhängigkeit des Vergleichs eine Reifendruckänderungsinformation erzeugt.

9. Vorrichtung (200) nach einem der Ansprüche 6 bis 8, **dadurch gekennzeichnet, dass** die Recheneinheit (210)
• in Abhängigkeit der zeitlichen Veränderung des dynamischen Drucksensorsignals eine Reifenzustandsinformation erzeugt,
wobei insbesondere vorgesehen ist, dass zur Erzeugung der Reifenzustandsinformation Extremwerte und/oder Durchschnittswerte des dynamischen Drucksensorsignals ausgewertet werden.

10. Vorrichtung (200) nach Anspruch 9, **dadurch gekennzeichnet, dass** die Recheneinheit (210)
• ein Vergleich der Reifenzustandsinformation mit einem Abnutzungsschwellenwert durchführt, und
• in Abhängigkeit des Vergleichs eine Reifenwechselinformation erzeugt.

11. Vorrichtung (200) nach einem der Ansprüche 6 bis 10, **dadurch gekennzeichnet, dass** die Vorrichtung (100)
• eine Sendeeinheit zur drahtlosen Versendung des dynamischen Drucksensorsignals, der Geschwindigkeitsinformation, der Untergrundinformation, der Reifendruckinformation, der Reifenzustandsinformation und/oder der Reifenwechselinformation
aufweist.

12. Vorrichtung (200) nach einem der Ansprüche 6 bis 11, **dadurch gekennzeichnet, dass** die Vorrichtung als Ventil (100) an einem Reifen (110) des Fahrzeugs ausgebildet ist, wobei insbesondere vorgesehen ist, dass der Drucksensor in das Ventil (100) integriert ist.

13. Zweirad, insbesondere ein Elektrofahrrad, mit
• einem Reifen (110), welcher ein Drucksensor zur Erfassung eines dynamischen Drucksensorsignals des Reifens aufweist, und
• einer Vorrichtung (200) nach einem der Ansprüche 6 bis 12, und
• einer Anzeigevorrichtung (280) zur Anzeige des dynamischen Drucksensorsignals, der Geschwindigkeitsinformation, der Untergrundinformation, der Reifendruckinformation, der Reifenzustandsinformation und/oder der Reifenwechselinformation.
